Europäisches Patentamt

**European Patent Office**

Office européen des brevets

(11) Publication number: **0 125 411 B1**

# EUROPEAN PATENT SPECIFICATION

(45) Date of publication of patent specification: 26.06.91   (51) Int. Cl.⁵: **G06F 15/20**

(21) Application number: 84102532.3

(22) Date of filing: 09.03.84

(54) Data and text processing system having terminals with dual emulation capability.

(30) Priority: 11.05.83 US 493579
11.05.83 US 493580

(43) Date of publication of application:
21.11.84 Bulletin 84/47

(45) Publication of the grant of the patent:
26.06.91 Bulletin 91/26

(84) Designated Contracting States:
DE FR GB IT

(56) References cited:
EP-A- 0 061 571
EP-A- 0 076 904
US-A- 4 150 429

(73) Proprietor: International Business Machines
Corporation
Old Orchard Road
Armonk, N.Y. 10504(US)

(72) Inventor: Mueller, Mark Wayne
3306 Great Valley
Cedar Park Texas 78613(US)
Inventor: Hill, Kevin Lynn
7004 Shumard
Austin Texas 78759(US)
Inventor: Hunt, Garyn Thomas
11506 Windermere Meadows
Austin Texas 78759(US)
Inventor: Smetana, Ronald
4815 Marblehead Dr.
Austin Texas 78759(US)
Inventor: McVey, James Michael
Route 1 Box 139
Florence Texas 76527(US)
Inventor: Miller, Ernest Lee
402 Ridge Oak
Georgetown Texas 78626(US)
Inventor: Clements, Silous Floyd
6015 Tonhowa Trail
Georgetown Texas 78626(US)

(74) Representative: Bonneau, Gérard
Compagnie IBM France Département de Pro-
priété Intellectuelle
F-06610 La Gaude(FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an integrated text and data processing system having a terminal which allows processing of link data before output and which provides simultaneous yet independent emulation of a display and printer normally associated with a host data processor.

Often, a user desires both the text processing functions of a text processor and access to a host data processor for data processing through a low cost data link. One solution to this problem is to utilize both a conventional text processor and a data display or printer compatible with the data processor. Such displays or printers are well known, e.g., the IBM 3278 Display Station and the IBM 3287 Printer, respectively. These devices essentially receive link data from the data processor and output it directly to the user. Another more desirable solution is to utilize the display or printer associated with the text processor as an output terminal for the host data processor. A system of this type has been described in the published European Patent Application EP-A-76904. In this application, an interactive system is provided which has the capability of switching from a text processing session to a data processing session wherein the text processor emulates a control unit and associated input/output terminals. While utilization of a text processor as a display and/or printer for a host data processor has produced satisfactory results, such a combination does not allow the user to process the formatted data before it is displayed on the display terminal. This is because the text processor cannot support the protocol normally associated with a control unit in a host data processor configuration. Moreover, this approach does not allow simultaneous yet independent use by the host data processor or both the display and printer associated with the text processor. Also, this approach is not functionally cost-effective.

Therefore, there is a need for a terminal for use in an integrated text and data processing system which allows a user to process link data before output, and which provides simultaneous yet independent emulation of both the display and printer normally associated with the host data processor.

In accordance with one aspect of the present invention, a data and text processing system comprises at least one central processing unit, a plurality of input/output terminals for the central processing units, and at least one control unit for each central processing unit having a plurality of ports, each of the ports being connected to an input/output terminal for interfacing and multiplexing the input/output terminal with at least one central processing unit, at least one of the input/output terminals comprising a text processor having a text processing program for processing text character data, input means for inputting text character data and output means for outputting the text character data after processing by the text processor. The input/output terminal includes a plurality of support logic means each connected to one of the ports of the control unit, and a link buffer connected between the text processor and each of the support logic means, for storing link data normally associated with a data processing task and received from or to be transmitted to the central processing unit. The input means are able to add value, via the text processor, to the link data while the link data is stored in the link buffer, to produce processed link data, and the output means include a plurality of peripheral devices for outputting the processed link data wherein each of the peripheral devices cooperates with one of the support logic means to enable the text processor to simultaneously emulate the peripheral devices which are normally associated with the central processing units.

The processing of link data by input of keystroke information through the test processor is carried out in a transparent fashion with respect to the central processing unit, i.e., the host processor thinks it is dealing with a display or printer normally associated therewith.

Therefore, in accordance with the invention the text processor of the input/output terminal emulates a conventional display or printer associated with the central processing unit. However, since link data can now be processed, the input/output terminal is "smarter" than the conventional display or printer. Specifically, this processing capability allows the function of the terminal to be enhanced without the participation or even knowledge of the central processing unit.

For a more complete understanding of the present invention and the advantages thereof, reference is now made to the following description taken in conjunction with the accompanying drawings in which :

Figure 1 is a block diagram of an integrated data processing/text processing system having a plurality of central processing units and input/output terminals.

Figure 2 is a block diagram of one of the input/output terminals of Figure 1 in accordance with the present invention.

Figure 3 is a block diagram showing the adapter section of the input/output terminal of Figure 2.

Figure 4 is a schematic diagram of the protocol control and link interface circuits of Figure 3 for one of the support logic circuits of Figure 2.

Figure 5 is a schematic diagram of the GLNDSC module of the protocol control circuit of Figure 4.

Figure 6 is a schematic diagram of the GLREGM module of the protocol control circuit of Figure 4.

Figure 7 is a detailed schematic diagram of the poll response logic of Figure 6.

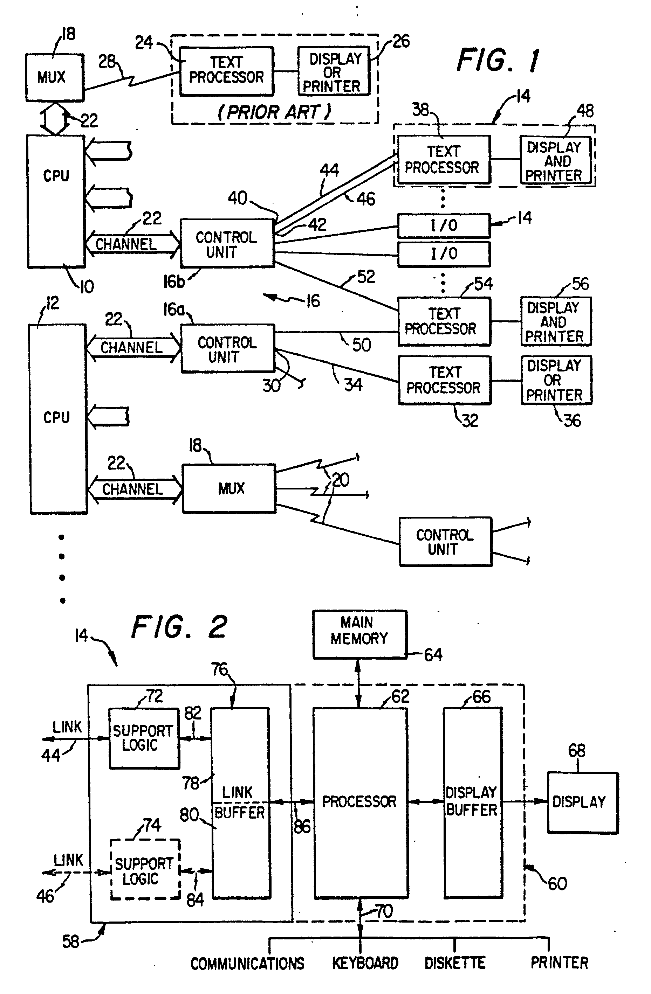

Referring now to the drawings wherein like reference characters designate like or similar parts throughout the several view, Figure 1 is a block diagram of an integrated data processing/text processing system incorporating several features of the present invention. This integrated system includes one or more central processing units 10 and 12, which have associated therewith a plurality of input/output terminals each designated generally by the reference numeral 14. A plurality of control units 16 are provided to connect the input/output terminals 14 to the central processing units 10 and 12. In the preferred embodiment of the invention, the control units are provided for interfacing and multiplexing the input/output terminals connected thereto with one or more of the central processing units. Such devices are well known in the prior art, e.g., the IBM 3274 Control Unit. This control unit can attach up to 32 displays, serial matrix printers and/or line printers. Referring back to Figure 1, the integrated data processing/text processing system may also include a communications multiplexer 18 which connects a plurality of control units 17 to one or more central processing units. Preferably, the control units are connected to the communications multiplexer 18 by modem links 20 and the communications multiplexer is connected to the CPU 12 by a local channel link 22. As seen in Figure 1, the control units 16 are also connected to the central processing units via local channel links 22, however, these devices may be remotely attached if desired.

It is known in the prior art to connect a conventional text processor to a central processing unit to allow the text processor to alternatively function as a data display terminal for the host CPU. As disclosed in the published European Patent application 76904 a conventional text processor 24 and its associated display and printer 26, is connected via a communications multiplexer 18 and modem link 28 to the central processing unit 10. As discussed in this copending application, the text processor 24 is capable of switching from an initiated text processing session to a data processing session wherein the text processor 24 emulates a control unit and associated input/output terminals which process link data under the control of the host central processing unit 10. As used herein, the term "link data" refers to data normally associated with data processing whereas the term "text character data" refers to data normally associated with text processing. These terms are not necessarily mutually exclusive, but are simply for convenience to emphasize that the conventional text processor does not normally process link data. While utilization of a text processor as a display and/or printer for a host central processing unit has produced satisfactory results, such a combination does not allow the user to process the formatted data before it is output on the display or transmitted to the central processing unit. This is essentially because the text processor cannot support the protocol normally associated with a control unit in a host data processor configuration. Moreover, this approach does not allow simultaneous yet independent use by the central processing unit of both the display and printer associated with the text processor.

According to the present invention, both of these capabilities are provided in an integrated data processing/text processing system. Referring to Figure 1, each of the control units 16 has a plurality of output ports, each of the ports being connected to an input/output terminal for interfacing and multiplexing the input/output terminal with one or more of the central processing units. For example, control unit 16a includes an output port 30 connected to a conventional text processor 32 via a coaxial cable 34. The text processor 32 includes an output device such as a display or printer 36. As will be described in more detail below, in accordance with one feature of the present invention, the text processor 32 is utilized to enhance the function of the input/output terminal incorporating this processor. In particular, the text processor 32 is utilized to both process the data to be displayed on the display or printer 36, and/or to process the data to be transmitted over the coaxial link 34 back to the central processing unit 12. Of course, the text processor 32 may also be used in its conventional fashion to process text character information to the display or printer 36.

In accordance with another important feature of the present invention, at least one of the input/output terminals 14 of Figure 1 may be used to emulate a pair of output devices normally associated with a central processing unit. For example, the IBM 3278 Display Station is typically used in clusters with the IBM 3274 Control Unit for displaying alphanumeric data and for entering data into and receiving data from a central processing unit. Similarly, the IBM 3287 Printer provides hard copy output capability to the IBM 3274 configuration. Often, a user desires both the text processing functions of a text processor and access to a host processing unit for data processing through a low cost data link. To this end, at least one input/output terminal 14 of the present invention includes a text processor 38 which is connected to ports 40 and 42 of the control unit 16b via coaxial cables 44 and 46. The text processor has associated therewith a display and printer 48. As will be described in more detail below, the text processor 38, and its associated display and printer, may be utilized to emulate the display and printer normally associated with the CPU 10, e.g., an IBM 3278 Display Station and an IBM 3287 Printer.

As also seen in Figure 1, at least one of the input/output terminals 14 may be connected to both control units 16a and 16b via the coaxial cables 50 and 52, respectively. In this manner, a text processor 54, and its associated display and printer 56, communicates with both of the central processing units 10 and 12. As discussed above, however, the dual emulation capability facilitated by such a connection is transparent regardless of whether the host is the same central processing unit, or separate central processing units accessing the terminal through a pair of control units.

Referring now to Figure 2, a block diagram of one of the input/output terminals 14 of the present invention is shown in detail. This input/output terminal includes an adapter section 58 and a text processor section 60. The text processor section 60 includes a conventional processor 62, associated main memory 64, and a display buffer 66. The output of the display buffer 66 drives a conventional display 68. The processor has access to a printer via bidirectional data bus 70. Input to the processor 62, which is provided over bidirectional data bus 70, may also take the form of communications, keyboard input, or information from an external storage such as a diskette. For example, text character information may be input via a keyboard and processed according to a computer program stored in the main memory 64 or the diskette. In the conventional operation of the text processor section 60, text character information is processed by the processor 62 and applied to the display buffer 66 or printer via bidirectional data bus 70. The buffer then outputs the processed text character information to the display 68.

In accordance with the present invention, the input/output terminal 14 of Figure 2 includes an adapter section 58 which includes support logic circuits 72 and 74, and a link buffer 76. As will be described in detail below, the support logic circuit 74 is optional as indicated by the dotted line. Each of the support logic circuits 72 and 74 is connected via the coaxial cables 44 and 46, respectively, to one of the control units 16 as discussed above with respect to Figure 1. The link buffer 76, which in the preferred embodiment of the invention is a random access memory (RAM), includes first and second sections 78 and 80 which communicate with the support logic circuits 72 and 74 via bidirectional data buses 82 and 84. As seen in Figure 2, the link buffer 76 is connected to the processor 62 via a bidirectional data bus 86.

According to a first aspect of the present invention, an integrated data processing/text processing system is provided wherein at least one of the input/output terminals incorporates the structure of Figure 2. According to this aspect of the invention, the utilization of separate link and display buffers facilitates processing of link data received from or to be transmitted across the coaxial cables 44 and 46. In particular, in the prior art displays or printers associated with a host data processor, the data received from the link is generally passed directly to the output. For example, in the IBM 3278 Display Unit, received link data is simply signal processed and placed directly in a display buffer for display. In contradistinction, the adapter section 58 of the input/output terminal includes a distinct link buffer 76 for storing link data therein before such data is either output to the display and/or printer, or transmitted back to a central processing unit. Since the link data is not written directly into the display buffer, the processor 62 may be utilized to "add value" to such data before the output thereof to the display and/or printer. By way of example, if a data base is stored in conjunction with one of the central processing units of Figure 1, this data base may be accessed by the input/output terminal and the link data therefrom formatted before being displayed or printed. Alternatively, this formatted data may be stored on a diskette and subsequently recalled and edited at a later time. Also, the processor 62 may be utilized to convert link data into a more easily understood language on the display screen associated with the text processor. It should be appreciated that such examples of "adding value" enhance the function of the input/output terminal to provide greater flexibility to the integrated data and text processing system. As discussed above, this processing of link data is transparent with respect to the host data processor, i.e., the host is unaware that the text processor is not merely displaying the transmitted data. Of course, the above examples of "adding value" are representative only, and it should be appreciated that the processor 62 may process the link data to the extent that it is capable of processing text character information.

According to the other important feature of the present invention, the adapter section 58 of the input/output terminal 14 of Figure 2 includes the plurality of support logic circuits 72 and 74 for connecting a pair of data links to one or more of the control units 16 of Figure 1. This is because the control unit cannot support more than one input/output device per coaxial cable without modification or non-transparent operation. This feature of the present invention is advantageous since it allows the input/output terminal 14 to simultaneously emulate two individual output devices normally associated with a control unit 16. By way of example only, the use of the plurality of support logic circuits 72 and 74 allows the input/output terminal 14 to emulate either two IBM 3278 Display Stations, two IBM 3287 Printers, or a combination of a 3278 Display and a 3287 Printer. Moreover, because a separate link buffer 76 is utilized as discussed above, this dual emulation function is totally transparent to the host central processing unit or units.

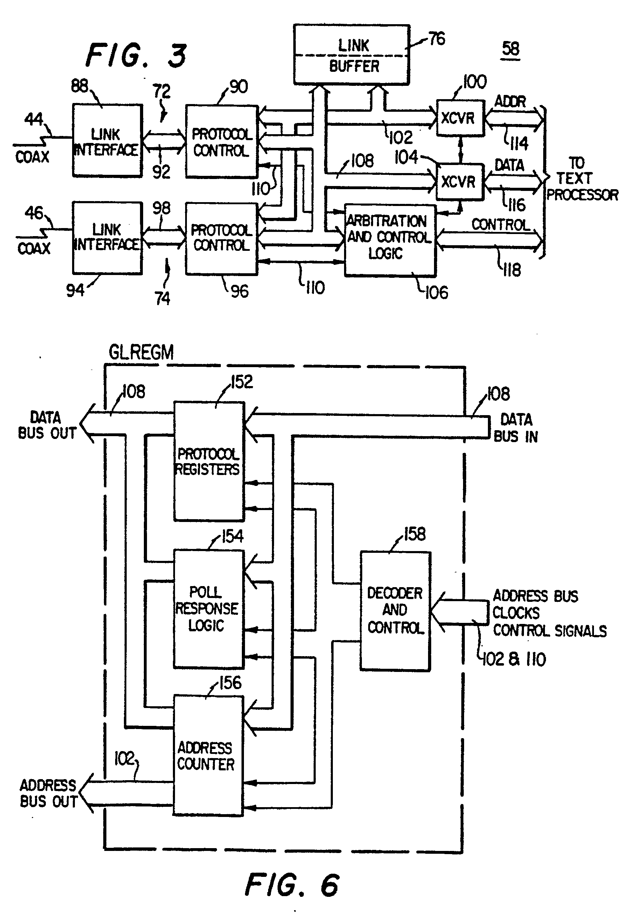

Referring now to Figure 3, a more detailed block diagram of the adapter section 58 of the input/output terminal is provided. In particular, support logic circuit 72 includes a link interface circuit 88 which is connected to the coaxial cable 44. The support logic circuit 72 also includes a protocol control circuit 90 which is connected to the link interface circuit 88 by the bidirectional data bus 92. Similarly, the support logic circuit 74 includes a link interface circuit 94 connected to a protocol control circuit 96 via the bidirectional data bus 98. The input to the link interface circuit 94 is connected to a protocol control circuit 96 via the bidirectional data bus 98. The input to the link interface circuit 94 is provided by the coaxial cable 46. As will be described in detail below, the link interface circuits 88 and 94 provide serializing and deserializing functions, as well as encoding and decoding functions ; while the protocol control circuits 90 and 96 respond to a protocol unique to the system for allowing transfer of data from a central processing unit to an output device.

The protocol control circuits are connected to the link buffer 76 and a first transceiver 100 via bidirectional address bus 102. These circuits are also connected to the link buffer 76, a second transceiver 104, and an arbitration and control logic circuit 106 via a bidirectional private data bus 108. The arbitration and control logic 106 also has control lines 110 connected to the protocol circuits 90 and 96. Bidirectional address, data and control buses 114, 116 and 118 are connected to the transceivers 100, 104 and the arbitration and control logic 106 respectively. These buses also connect to the processor 62 of Figure 2.

In operation of the circuit of Figure 3, the link interface circuits 88 and 94 provide the functions of encoding and decoding the serial bi-phase link data, along with providing amplification and means for driving data on the coaxial cables 44 and 46. These circuits also serialize and deserialize the link data stream and provide all the necessary timing to the protocol control circuits 90 an 96. Furthermore, the link interface circuits provide the function of synchronizing the link data received from a control unit to the internal timing of the circuitry on the adapter section 58, as well as transmitting data with compatible timing for both interfaces.

The protocol control circuits 90 and 96 provide all the data manipulation and control functions to allow the input/output terminal to appear to the link as a conventional data display or printer. As will be described in more detail below, each protocol control circuit takes a synchronized word from its perspective link interface circuit in parallel form and determines the action needed by that word. If the word is a valid command, the protocol control circuit proceeds through the sequential states necessary for acting on the command, whether it is to fetch data or to condition some internal control lines. The protocol control circuits are also responsive for generating a response and initiating it through their respective link interface circuits.

The function of the arbitration and control logic 106 is to provide arbitration and grant internal time slots to the display and printer devices associated with the text processor. In particular, since the timings of the two links and the processor control bus 118 are all asynchronous to one another, time slots are allocated on the private data bus 108 to allow timely access to the link buffer 76 by all of the interfaces. The arbitration and control logic 106 determines priorities and grants the time slots to the devices. By allowing the processor 62 to access the link buffer 76, the arbitration and control logic enables the processor to "add value" to the link data stored therein. This circuit also provides master timing to the adapter section, along with master and slave clocks for data movement. Finally, the transceivers 100 and 104 are provided to transform the data on the bidirectional address and data buses 114 and 116 to a form compatible for use with the adapter section 58 circuitry.

Therefore, in accordance with the present invention, the adapter section 58 provides all the necessary hardware for obeying the link protocol, thus allowing the processor to access and control link functions. The adapter section 58 of the input/output terminal meets the required timing specifications on the two simultaneous links, but allows the links to be maintained by the software of the text processor. Such a system allows the processor to "add value" to the link data, thus enhancing the function of the integrated text and data processing system.

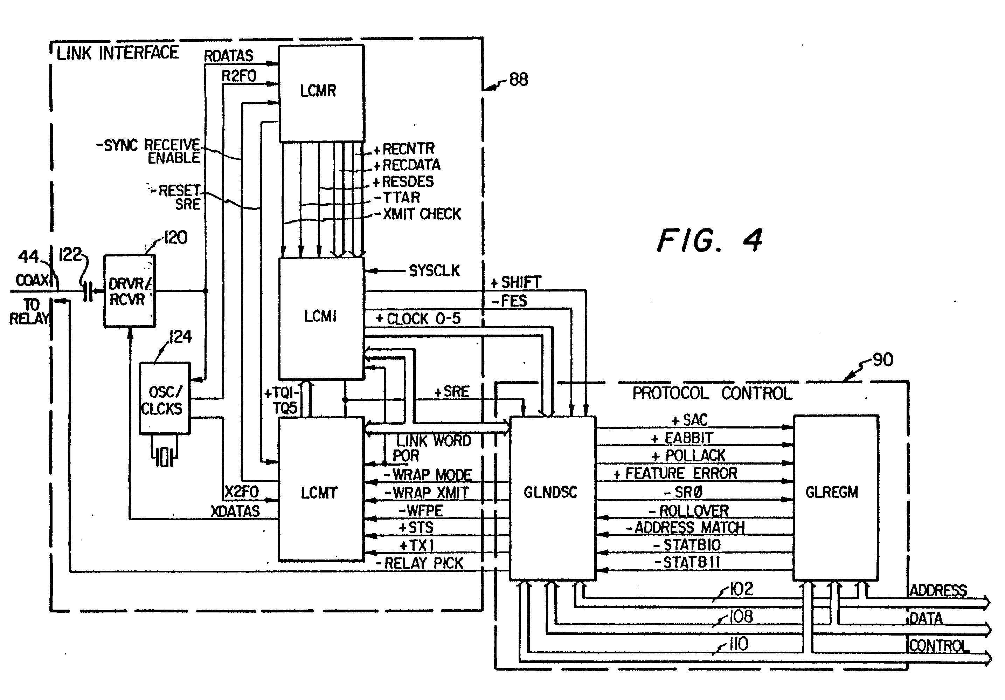

Referring now to Figure 4, a schematic diagram of one of the link interface circuits and one of the protocol control circuits of Figure 3 is provided. It should be appreciated that the adapter section 58 includes identical hardware for the second coaxial link. With reference to Figure 4, the coaxial cable 44 is connected to a driver/receiver circuit 120 via a capacitor 122. The link interface circuit also includes an oscillator module 124 for providing clock signals to the modules LCMR and LCMT. The outputs of the modules LCMR and LCMT are provided to another module LCMI. In operation, the driver/receiver circuit 120 essentially provides the necessary encoding and decoding functions of the link data while the LCMT and LCMR modules provide serialization and deserialization thereof, respectively. Specifically, serial 12 bit data words or protocol commands are applied via the coaxial cable 44 to the link interface circuit. This received data is decoded by the driver/receiver circuit 120 and then transferred via the RDATAS line to the LCMR module, where associated synchronization and parity bits are removed. The multiplexed data words are then transferred to the LCMI module where the data is deserialized. The words are then applied to the protocol control circuit via the bidirectional data bus LINK WORD.

As seen in Figure 4, each of the protocol control circuits of Figure 3 include two modules, a GLNDSC control module, and a GLREGM register module. These modules are connected to the bidirectional address, data and control buses 102, 108 and 110, respectively. The GLNDSC module receives the synchronized word on the bidirectional LINK WORD data bus from the associated link interface circuit and determines the action needed by that word. As will be described in more detail below, the GLNDSC module proceeds through the sequential states necessary for acting on that command, whether it is to fetch data or to condition some internal control lines. This module is also responsible for generating a response and initiating it through the link interface circuit. In particular, the GLNDSC module is connected to the LCMT module of the link interface circuit. The LCMT module serializes the parallel response word received from the GLNDSC module and transfers this word in serial form to the driver/receiver circuit 120 via the XDATAS line. The GLNDSC MODULE is also connected to the LCMT module by a plurality of control lines. For example, the control line titled WRAP MODE forces the link interface modules into a wrap mode state, whereas a signal applied on the WRAP XMIT control line instructs the link interface circuit to transmit data back to the control unit and central processing unit. The other control lines connecting the GLNDSC module and the LCMT module in the link interface circuit provide various specific control functions.

The GLNDSC and GLREGM modules in the protocol control circuit of Figure 4 are also connected via a plurality of command lines as shown. For example, the control line POLLACK is utilized to indicate to the register module that a poll acknowledge command has been received from one of the control units. The remainder of the command lines provides other commands between these two modules of the protocol circuit. Note that the GLNDSC module of the protocol circuit includes a RELAY PICK line for sending a control signal to a relay, within the input/output 14. This signal controls the actuation of the relay, allowing the link interface circuit to be connected or disconnected from the coaxial cable 44.

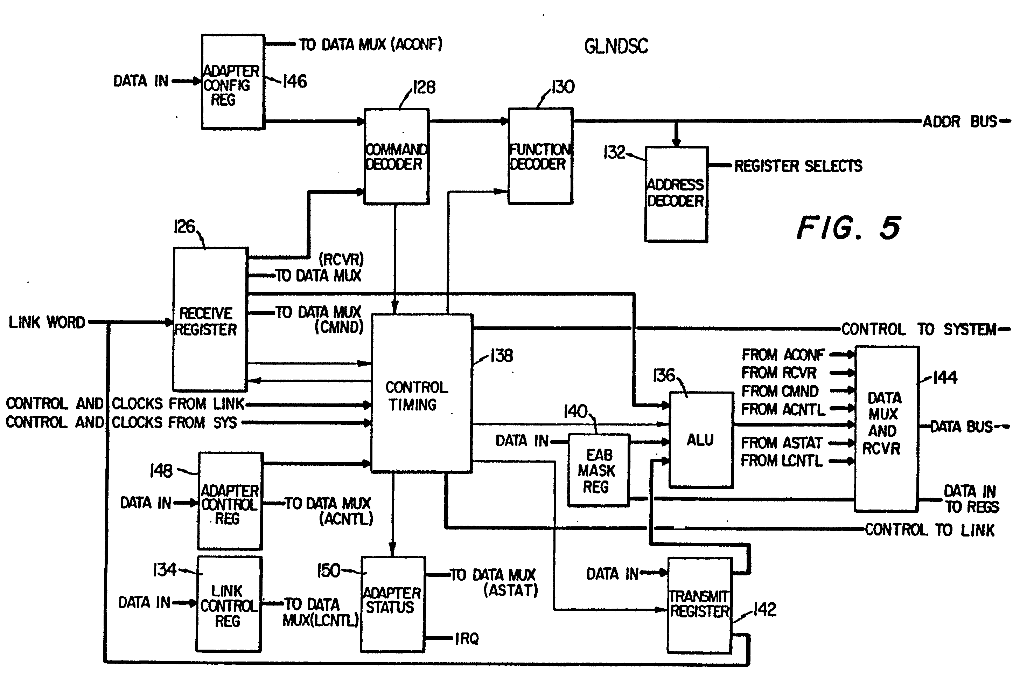

Referring now to Figure 5, a detailed schematic diagram of the GLNDSC module of Figure 4 is shown. This module includes a number of functional blocks which are utilized by the protocol associated with the present system. This desired protocol, entitled NDS, has been utilized between an IBM 3274 Control Unit and either the IBM 3278 Display Station or the IBM 3287 Printer. The NDS protocol is a high-speed, asynchronous serial protocol wherein data to be transmitted or received over the coax link has a bit rate of 2.3587 MHz., and is encoded using a binary di-pulse technique. In accordance with this protocol, 12 bits are assembled to form one word for transmission over the coax link. The first bit of the 12 bit word is a synchronizing bit and the last bit is a parity bit. A word from a control unit 16 of Figure 1 to the input/output terminal 14 will be either a command word or a data word. According to the protocol, an error condition will result if the input/output terminal fails to turn line around and respond to a command within 5.5 microseconds. This protocol also invokes other stringent timing requirements on various high level commands sent by a control unit. In operation, the NDS protocol commands are designed to provide access to the link buffer from the coax link. There are also provisions for monitoring and modifying the status of the device being emulated by the text processor in the input/output terminal.

Referring back to Figure 5, the GLNDSC module of the protocol control circuit includes a number of functional blocks which perform these and other functions of the NDS protocol. These blocks include the receive register 126, the command, function and address decoders 128, 130 and 132 respectively, the link control register 134, the arithmetic logic unit 136, the control timing circuit 138, the EAB mask register 140, the transmit register 142 and the data multiplexer and transceiver 144. These functional blocks are conventional in either the IBM 3278 Display Station or the IBM 3287 Printer and are utilized to respond to the NDS protocol commands. In accordance with the present invention, the GLNDSC module has been designed to include a plurality of additional registers which allow the processor 62 of Figure 2 to emulate one of these work stations. To this end, the GLNDSC module includes an adapter configuration register 146, an adapter control register 148, and an adapter status register 150. All of these registers, and in particular the adapter control register 146, allow the processor 62 in the input/output terminal to access and control link functions. For example, under software control these registers interrupt the processor 62 when link activity is detected that will affect the contents or state of the display screen. Also, to further reduce the load on the processor, these registers provide status indications as to which sections of the display require updates. This feature limits the amount of data that has to be transferred from the link buffer 76 to the display buffer 66 of Figure 2 when link activity has been detected. It should be appreciated that the contents of the link buffer are transferred to the display buffer under software control.

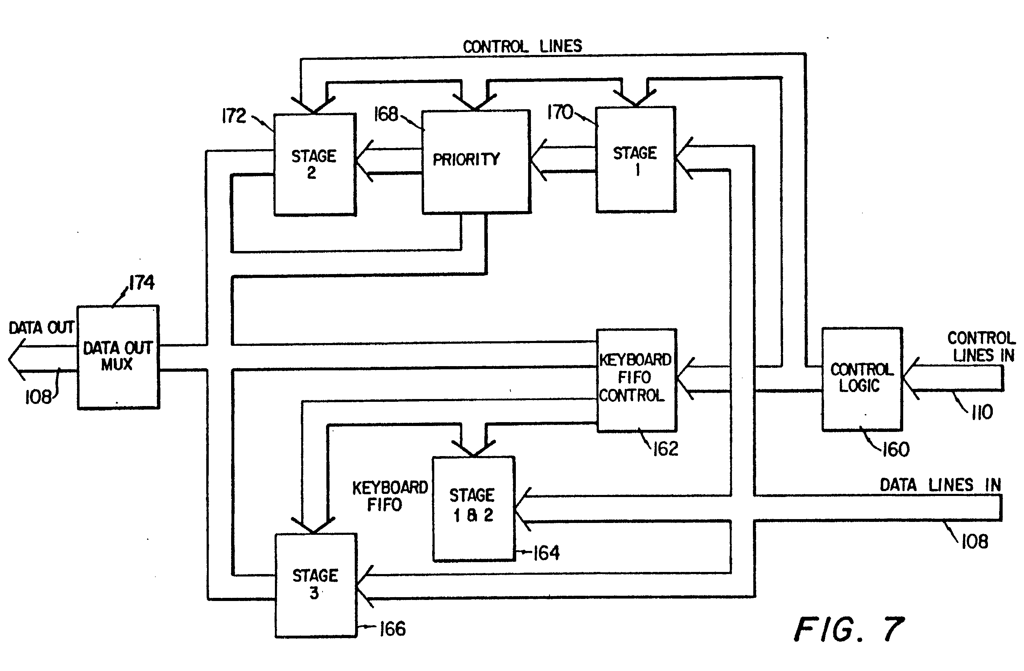

Referring now to Figure 6, a detailed schematic of the register module GLREGM of the protocol control circuit of Figure 4 is shown. More specifically, the GLREGM module includes protocol register 152, poll response logic 154, address counter logic 156, and decode and control logic 158. As discussed above with respect to Figure 4, the GLREGM module connects to the bidirectional address, data and control buses 102, 108 and 110, respectively. The protocol registers 152, the address counter logic 156, and the decode and control logic 158 are function blocks utilized by the NDS protocol, and need not to be described in detail. However, the poll response logic 152 has been added to the prior art NDS protocol control circuit to facilitate processor access to the data link.

Referring to Figure 7, the poll response logic 154 of Figure 6 is shown in detail. This circuit includes a control logic register 160, a keyboard FIFO control register 162, keyboard FIFO registers 164 and 166, priority register 168, poll response registers 170 and 172, and an output multiplexer 174. As seen in Figure 7, the poll response logic 154 is connected to the bidirectional data and control buses 108 and 110 of Figure 3.

Referring simultaneously to Figures 4-7, an example of the operation of the hardware described therein will now be provided. By way of example only, it should be appreciated that the GLNDSC module of the protocol control circuit of Figure 4 is continually polled by its associated control unit to determine the status of the display or printer associated therewith. A "poll" simply inquires whether there has been any activity in the terminal since the last poll. Moreover, the GLNDSC module may also receive a read data command, requesting transfer of link data in the link buffer to the central processing unit ; or in the alternative, a write command for controlling transfer of link data from the central processing unit to the link buffer.

Since a poll response must begin within 5.5 microseconds, such responses must be set up before a poll is received by the protocol control circuit. Referring to Figure 7, poll responses are set up in the registers 170 and 172 by the processor and the priority register 168 prioritizes these poll responses. Therefore, when a poll comes in on the link, it is decoded by the link interface circuit, and in response thereto, the GLNDSC module accesses the poll response registers to transmit the required information back to the associated control unit. It should be noted that the keyboard FIFO registers 164 and 166, in conjunction with the keyboard FIFO control 162, buffer the keystrokes input from the processor and check for keystroke overrun. The use of the keyboard FIFO registers 164 and 166 ensure that keystrokes are presented to the data link in a transparent fashion.

If a write data command is received over the coax line, it is decoded by the link interface circuit and presented to the GLNDSC module of the protocol control circuit of Figure 4. In response thereto, the GLNDSC module accesses its associated section of the link buffer and prepares this section for receipt of link data. The received link data is then transferred to the link buffer via the bidirectional data bus 108 and stored therein as controlled by address signals supplied by the GLREGM module via the bidirectional address bus 102. To the contrary, if a read command is received by the GLNDSC module, link data is read from the link buffer and transmitted over the coax link to the respective control unit.

Therefore, in accordance with the present invention, an input/output terminal for use in an integrated text and data processing system is provided which allows processing of link data before output and which provides simultaneous dual emulation of a display and printer normally associated with a host data processor. In accordance with a first important feature of the present invention, an input/output terminal includes a distinct link buffer which receives link data from the coaxial link. Since the input/output terminal includes a processor, the functional capability of this terminal is enhanced according to the present invention since the link data can be processed before being output. For example, the link data can be transferred from the link buffer to a diskette, or keystrokes can be input to the processor to manipulate this data into some other form in accordance with a program stored in the main memory of the text processor.

Alternatively, information provided via an external communications device, such as another central processing unit or text processor, may be utilized to process this data in some further fashion. It should be appreciated that this "added value" capability is only limited by the capabilities of the text processor itself.

In accordance with another important feature of the present invention, the input/output terminal includes an adapter section having the necessary hardware for allowing the processor to access a pair of coax links. As discussed in detail above, this hardware facilitates the connection of the pair of links to the input/output terminal, thereby allowing the text processor to simultaneously emulate both a display and printer normally associated with a central processing unit. In the preferred embodiment of the invention, both of the above arrangements proceed through an intermediate multiplexing control unit having a plurality of output ports. Through the use of the present invention, the input/output terminal allows effective processing of link data before output and provides simultaneous dual emulation of a display and printer normally associated with a host data processor.

## Claims

1. A data and text processing system comprising at least one central processing unit (10 or 12), a plurality of input/output terminals (14) for said at least central processing unit, and at least one control unit (16) for each central processing unit having a plurality of ports (40, 42) each of said ports being connected to an input/output terminal for interfacing and multiplexing said input/output terminal with at least one central processing unit, at least one of said input/output terminals comprising a text processor (62) having a text processing program for processing text character data, input means (via 70) for inputting text character data and output means (36, 48, 56) for outputting said text character data after processing by said text processor;

said system being characterized in that :

said input/output terminal includes a plurality of support logic means (72, 74) each connected (via 34, 44, 46, 50 or 52) to one of the ports of said at least one control unit and a link buffer (76) connected between said text processor and each of said support logic means, for storing link data normally associated with a data processing task and received from or to be transmitted to said at least one central procesing unit,

said input means are able to add value, via said text processor, to the link data while said link data is stored in said link buffer, to produce link data, and

said output means include a plurality of peripheral devices for outputting said processed link data wherein each of said peripheral devices cooperates with one of said support logic means to enable said text processor to simultaneously emulate the peripheral devices which are normally associated with said central processing units.

2. The system according to claim 1 wherein one of said peripheral devices is a display (68) associated with a display buffer (66) for buffering said link data and said text character data before output thereof to said display.

3. The system according to claim 1 or 2 wherein one of said peripheral devices includes a display and a printer.

4. The system according to any one of the preceding claims wherein each of said support logic means (72, 74) is connected to one of said ports by a coaxial cable (44, 46).

5. The system according to any one of the preceding claims wherein each of said support logic means (72, 74) is responsive to an asynchronous serial protocol associated with said at least one control unit (16).

6. The system according to any one of the preceding claims wherein each of said support logic means (72, 74) further includes link interface means (88, 94) for encoding and decoding, and serializing and deserializing said data and protocol commands received from said at least one control unit (16).

7. The system according to any one of the preceding claims wherein each of said support logic means (72, 74) further includes protocol control means (90, 96) respectively connected to said link interface means (88, 94) and responsive to protocol commands for controlling the movement of said data throughout the input/output terminal (14).

8. The system according to claim 7 wherein said link buffer (76) includes first and second sections, said first section being connected to the protocol control means (90) of one of said support logic means (72), and said second section connected to the protocol control means (96) of said other support logic means (74).

9. The system according to claim 7 or 8 wherein said input/output terminal (14) further includes arbitration and control logic means (106) for controlling access to said link buffer (76) by said text processor (62) and said protocol control means (90, 96) of each of said support logic means (72, 74).

10. The system according to claim 7, 8 or 9 wherein said protocol control means (90, 96) includes poll response logic means (154) for responding to polls transmitted to said input/output terminal (14) from said at least one control unit.

11. The system according to any one of the preceding claims wherein said input means includes a keyboard associated with said text processor (62).

12. The system according to claim 11 wherein said input means further includes means for inputting and outputting control information to a storage means (64) associated with said text processor (62), wherein said link data may be processed by input of keystroke information through said keyboard in accordance with said control information in said storage means.

13. The system according to claim 11 wherein said input means further includes control information derived from an external central processing unit or another text processor associated with said system.

**Revendications**

1. Système de traitement de données et de texte comprenant au moins une unité centrale de traitement (10 ou 12), une pluralité de terminaux d'entrée/sortie (14) pour ladite au moins une unité centrale de traitement, et au moins une unité de commande (16) pour chaque unité centrale de traitement, comportant une pluralité d'accès (40,42), dont chacun est raccordé à un terminal d'entrée/sortie pour réaliser l'interface et le multiplexage dudit terminal d'entrée/sortie avec au moins une unité centrale de traitement, au moins l'un desdits terminaux d'entrée/sortie comprenant un processeur de texte (62) comportant un programme de traitement de texte pour traiter des données de caractères de texte, des moyens d'entrée (par l'intermédiaire de 70) pour entrer des données de caractères de texte et des moyens de sortie (36,48,56) pour délivrer en sortie lesdites données de caractères de texte après leur traitement par ledit processeur de texte; ledit système étant caractérisé en ce que : ledit terminal d'entrée/sortie comprend une pluralité de moyens logiques d'assistance (72,74) raccordés chacun (par l'intermédiaire de 34,44,46,50 ou 52) à l'un des accès de ladite au moins une unité de commande et une mémoire tampon de liaison (76) branchée entre ledit processeur de texte et chacun desdits moyens logiques d'assistance, pour mémoriser les données de liaison associées normalement à une tâche de traitement de données et reçues en provenance de ou devant être transmises en direction de ladite au moins une unité centrale de traitement, lesdits moyens d'entrée peuvent ajouter une valeur, par l'intermédiaire dudit processeur de texte, aux données de liaison, alors que lesdites données de liaison sont mémorisées dans ladite mémoire tampon de liaison, pour produire des données de liaison, et lesdits moyens de sortie comprennent une pluralité de dispositifspériphériques servant à délivrer en sortie lesdites données de liaison traitées, chacun desdits dispositifs périphériques coopérant avec l'un desdits moyens logiques d'assistance pour autoriser ledit dispositif de traitement de texte à émuler simultanément les dispositifs périphériques qui sont normalement associés auxdites unités centrales de traitement.

2. Système selon la revendication 1, dans lequel l'un desdits dispositifs périphériques est un dispositif d'affichage (68) associé à une mémoire tampon d'affichage (66) servant à mémoriser temporairement lesdites données de liaison et lesdites données de caractères de texte avant leur envoi audit dispositif d'affichage.

3. Système selon la revendication 1 ou 2, dans lequel l'un desdits dispositifs périphériques comprend un dispositif d'affichage et une imprimante.

4. Système selon l'une quelconque des revendications précédentes, dans lequel chacun desdits moyens logiques d'assistance (72,74) est raccordé à l'un desdits accès par un câble coaxial (44,46).

5. Système selon l'une quelconque des revendications précédentes, dans lequel chacun desdits moyens logiques d'assistance (72,74) est sensible à un protocole série asynchrone associé à ladite au moins une unité de commande (16).

6. Système selon l'une quelconque des revendications précédentes, dans lequel chacun desdits moyens logiques d'assistance (72,74) comprend en outre des moyens (88,94) d'interface de liaison pour le codage et le décodage et la sérialisation et la désérialisation desdites données et des commandes de protocole, reçues à partir de ladite au moins une unité de commande (16).

7. Système selon l'une quelconque des revendications précédentes, dans lequel chacun desdits moyens logiques d'assistance (72,74) comprend en outre des moyens de commande de protocoles (90,96) raccordés respectivement auxdits moyens (88,94) d'interface de liaison et sensibles à des commandes de protocoles pour la commande du mouvement desdites données au travers du terminal d'entrée/sortie (14).

8. Système selon la revendication 7, dans lequel ladite mémoire tampon de liaison (76) comprend des première et seconde sections, ladite première section étant raccordée aux moyens de commande de protocoles (90) de l'un desdits moyens logiques d'assistance (72) et ladite seconde section étant raccordée aux moyens de commande de protocoles (96) de l'autre moyen logique d'assistance (74).

9. Système selon la revendication 7 ou 8, dans lequel ledit terminal d'entrée/sortie (14) comprend en outre des moyens logiques d'arbitrage et de commande (106) servant à commander l'accès de ladite mémoire tampon de liaison (76) par ledit processeur de texte (62) et lesdits moyens de commande de protocoles (90,96) de chacun desdits moyens logiques d'assistance (72,74).

10. Système selon la revendication 7,8 ou 9, dans lequel lesdits moyens de commande de protocoles (90,96) comprennent des moyens logiques (154) de réponse à des appels envoyés audit terminal d'entrée/sortie (14) à partir de ladite au moins unité de commande.

11. Système selon l'une quelconque des revendications précédentes, dans lequel lesdits moyens d'entrée comprennent un clavier associé audit processeur de texte (62).

12. Système selon la revendication 11, dans lequel lesdits moyens d'entrée comprennent en outre des moyens pour introduire et délivrer des informations de commande dans et en sortie d'un moyen de mémoire (64) associé au processeur de texte (62), lesdites données de liaison pouvant être traitées par l'entrée d'informations audit clavier en fonction desdites informations de commande dans ledit moyen de mémoire.

13. Système selon la revendicatin 11, dans lequel lesdits moyens d'entrée comprennent en outre des informations de commande dérivées d'une unité centrale externe de traitement ou d'un autre processeur de texte associé au système.

## Ansprüche

1. Daten- und Textverarbeitungssystem mit zumindest einer Zentraleinheit (10 oder 12), einer Mehrzahl von Eingangs-Ausgangsterminals (14) für die zumindest eine Zentraleinheit und zumindest einer Steuereinheit (16) für jede Zentraleinheit mit einer Mehrzahl von Anschlüssen (40, 42), wobei jeder der Anschlüsse mit einem Eingangs-Ausgangsterminal zum Anschließen und Multiplexen des Eingangs-Ausgangsterminals mit zumindest einer Zentraleinheit verbunden ist, zumindest eines der Eingangs-Ausgangsterimals einen Textprozessor (62) mit einem Textverarbeitungsprogramm für das Verarbeiten von Textzeichen-Daten, ein Eingabemittel (über 70) zum Eingeben von Textzeichen-Daten und Ausgabemittel (36, 48, 56) zum Ausgeben der Textzeichen-Daten nach dem Verarbeiten mittels des Textprozessors aufweist,

wobei das System dadurch gekennzeichnet ist, daß:

das Eingangs-Ausgangsterminal eine Mehrzahl von Unterstützungslogikmitteln (72, 74) aufweist, wobei jedes (über 34, 44, 46, 50 oder 52) mit einem der Anschlüsse der zumindest einen Steuereinheit und einem Verbindungspuffer (76) verbunden ist, der zwischen dem Textprozessor und jedem der Unterstützungsmittel geschaltet ist, um Verbindungsdaten zu speichern, die gewöhnlich einer Datenverarbeitungsaufgabe zugeordnet sind, und von der zumindest einen Zentraleinheit empfangen werden oder an sie übertragen werden sollen,

die Eingabemittel über den Textprozessor einen Wert zu den Verbindungsdaten hinzufügen können, während die Verbindungsdaten in dem Verbindungspuffer gespeichert werden, um Verbindungsdaten zu erzeugen und die Ausgabemittel eine Mehrzahl peripherer Einrichtungen zum Ausgeben der verarbeiteten Verbindungsdaten aufweisen, bei welchen jede der peripheren Einrichtungen mit einem der Unterstützungslogikmittel zusammenwirkt, um es dem Textprozessor zu ermöglichen, die peripheren Einrichtungen gleichzeitig zu emulieren, die gewöhnlich den Zentraleinheiten zugeordnet sind.

2. System nach Anspruch 1, bei welchem eine der peripheren Einrichtungen ein Datensichtgerät (68) ist, das einen Datensichtgerätpuffer (66) zur Pufferung der Verbindungsdaten und der Textzeichen-Daten vor deren Ausgabe zu dem Datensichtgerät zugeordnet ist.

3. System nach Anspruch 1 oder 2, bei welchem eine der peripheren Einrichtungen ein Datensichtgerät und einen Drucker aufweist.

4. System nach irgendeinem der vorgehenden Ansprüche, bei welchem jedes der Unterstützungslogikmittel (72, 74) mittels eines Koaxialkabels (44, 46) mit einem der Anschlüsse verbunden ist.

5. System nach irgendeinem der vorgehenden Ansprüche, bei welchem jedes der Unterstützungslogikmittel (72, 74) auf ein asynchrones serielles Protokoll anspricht, welches der zumindest einen Steuereinheit (16) zugeordnet ist.

6. System nach irgendeinem der vorgehenden Ansprüche, bei welchem jedes der Unterstützungslogikmittel (72, 74) ferner Verbindungsschnittstellenmittel (88, 94) zur Codierung und Decodierung und Serialisierung und Entserialisierung der Daten und Protokollbefehle aufweist, die von der zumindest einen Steuereinheit (16) empfangen werden.

7. System nach irgendeinem der vorgehenden Ansprüche, bei welchem jedes der Unterstützungslogikmittel (72, 74) ferner ein Protokollsteuermittel (90, 96) aufweist, das jeweils mit den Verbindungsschnittstellenmitteln (88, 94) verbunden ist und auf Protokollbefehle zum Steuern der Bewegung der Daten durch das Eingangs-Ausgangsterminal (14) anspricht.

8. System nach Anspruch 7, bei welchem der Verbindungspuffer (76) erste und zweite Bereiche aufweist, wobei der erste Bereich mit dem Protokollsteuermittel (90) eines der Unterstützungslogikmittel (72) verbunden ist und der zweite Bereich mit dem Protokollsteuermittel (96) des anderen Unterstützungslogikmittels (74) verbunden ist.

9. System nach Anspruch 7 oder 8, bei welchem das Eingangs-Ausgangsterminal (14) ferner Entscheidungs- und Steuerlogikmittel (106) zum Steuern eines Zugriffes auf den Verbindungspuffer (76) durch den Textprozessor (62) und das Protokollsteuermittel (90, 96) jedes der Unterstützungslogikmittel (72, 74) aufweist.

10. System nach Anspruch 7, 8 oder 9, bei welchem das Protokollsteuermittel (90, 96) Aufrufantwort-Logikmittel (154) zum Antworten auf Aufrufe aufweist, die von der zumindest einen Steuereinheit an das Eingangs-Ausgangsterminal (14) übertragen werden.

11. System nach irgendeinem der vorgehenden Ansprüche, bei welchem das Eingabemittel eine dem Textprozessor (62) zugeordnete Tastatur aufweist.

12. System nach Anspruch 11, bei welchem das Eingabemittel ferner Mittel zum Eingeben und Ausgeben einer Steuerinformation an einem Speichermittel (64) aufweist, welches dem Textprozessor (62) zugeordnet ist, bei welchem die Verbindungdaten durch Eingeben einer Tastenanschlaginformation durch die Tastatur gemäß der Steuerinformation in dem Speichermittel verarbeitet werden können.

13. System nach Anspruch 11, bei welchem das Eingabemittel ferner eine Steuerinformation enthält, die von einer externen Zentraleinheit oder einem anderen dem System zugeordneten Textprozessor abgeleitet wird.

FIG. 1

(PRIOR ART)

FIG. 2

FIG. 3

FIG. 6

FIG. 4

FIG. 5

GLNDSC

FIG. 7